# NEUE EUROPÄISCHE PATENTSCHRIFT

(11) **EP 2 273 369 B2**
(45) Veröffentlichungstag und Bekanntmachung des Hinweises auf die Entscheidung über den Einspruch: **07.09.2016**
(45) Hinweis auf die Patenterteilung: 30.11.2011
(21) Anmeldenummer: 09164672.9
(22) Anmeldetag: 06.07.2009
(51) Int. Cl.: G06F 11/00, G06F 11/07

(54) **Verfahren zur Darstellung einer sicherheitsrelevanten Information auf einer Anzeigevorrichtung und Vorrichtung zur Durchführung des Verfahrens**
Method for presenting safety-relevant information on a display device and device for carrying out the method
Procédé de représentation d'une information relative à la sécurité sur un dispositif d'affichage et dispositif d'exécution du procédé

(43) Veröffentlichungstag der Anmeldung: 12.01.2011
(73) Patentinhaber: Deuta-Werke GmbH, 51465 Bergisch Gladbach (DE)
(72) Erfinder: Ganz, Rudolf, 51491 Overath (DE); Manz, Holger, 51467 Bergisch Gladbach (DE); Haas, Thorsten, 50679 Köln (DE)
(74) Vertreter: Lippert, Stachow & Partner

(56) Entgegenhaltungen:
- EP-A- 0 856 792
- DE-A1- 4 332 143

## Beschreibung

Die Erfindung betrifft ein Verfahren zur Darstellung einer sicherheitsrelevanten Information, insbesondere eines sicherheitskritischen Fehlers, umfassend die Verfahrensschritte Eingeben mindestens eines erfassten Werts einer Eingangsgröße in eine Rechnereinheit, rechentechnisches Verarbeiten der Eingangsgröße in der Rechnereinheit zu einer die Eingangsgröße abbildenden Bilddatensequenz, Weiterleiten der Bilddatensequenz an eine Anzeigevorrichtung und Darstellen der Bilddatensequenz auf der Anzeigevorrichtung.

Derzeitfinden in vielen Anwendungsbereichen, wie beispielsweise in Steuerungs- und Überwachungsanlagen, vermehrt TFT-Displays als Anzeigevorrichtungen Anwendung. In den genannten Fällen werden TFT-Displays zudem immer mehr zur Anzeige von sicherheitskritischen Informationen genutzt. Dieses erfolgt beispielsweise in der Zugleittechnikoder in Flugzeugen. Die eingesetzten Rechnereinheiten sind in der Regel auf Basis von Kontrollern oder PCs mit Software und gegebenenfalls mit Betriebssystem realisiert.

Ein Fehler wird als sicherheitskritischer Fehler angesehen, wenn die Anzeigevorrichtung etwas scheinbar richtig oder Richtiges anzeigt, was aber nicht die tatsächlichen Gegebenheiten abbildet, z. B. nicht die tatsächliche Geschwindigkeit eines Zuges wiedergibt. Es wird also nur scheinbar der korrekte Wert angezeigt, der Fehler ist aber für einen Betrachter nicht erkennbar.

Bestehende Verfahren und Vorrichtungen zu dessen Durchführung umfassen eine Rechnereinheit, welche die der Eingangsgröße entsprechenden Bilddatensequenz, z. B. bild- oder vektororientiert für die Darstellung auf der Anzeigevorrichtung erstellt. Die Anzeigevorrichtung kann beliebig ausgebildet sein, z. B. als Monitor oder heute regelmäßig auch als TFT. Es ist jedoch anzumerken, dass die Erfindung völlig unabhängig von dereingesetzten Anzeigevorrichtung ist und insofern diesbezüglich jede geeignete Technologie einsetzen kann. Die Rechnereinheit ist über bekannte Schnittstellen mit der Darstellungseinheit verbunden.

Bei der vorliegenden Erfindung wird die Anzeigevorrichtung bei der Fehleranalyse nicht berücksichtigt und als perfektes, also fehlerfreies System gemäß obiger Definition angesehen. Entscheidend ist aber, dass der vom System erfasste Wert der Eingangsgröße auf der Anzeigevorrichtung korrekt dargestellt wird.

Bekannten Verfahren und Vorrichtungen zu deren Durchführung liegt die Annahme zugrunde, dass bei einem Fehler in der Anzeigevorrichtung für den Betrachter ein offensichtlich falsches Bild auf der Anzeigevorrichtung dargestellt wird. Die Anzeige erscheintz. B. nicht konstant oder gestört, kann z. B. die Farbe ändern, eine Zahl fällt aus oder ist verzerrt. Ferner ist anzumerken, dass ein Fehler oder eine Störung in der Anzeigevorrichtung selbst ebenfalls zu einer sichtlich falschen Darstellung führt.

Grundsätzlich sind bekannte Verfahren und Vorrichtungen sehrfehleranfällig; so können z. B. Fehler in jeder einzelnen Komponente der Rechnereinheit auftreten, z. B. durch einen defekten Mikroprozessor, im Grafikprozessor, in den einzelnen Speicherbausteinen, in der Spannungsversorgung oder auch in dem eingesetzten Betriebssystem aufgrund der bei der Softwareerstellung verwendeten Bibliotheken. Aus diesem Grund ist eine Sicherheitsprüfung zur Zertifizierung des Gesamtsystems sehr aufwändig und muss stets sämtliche Komponenten umfassen. Dieses bedingt auch bei jeder Aktualisierung oder Änderung von Systemkomponenten, einschließlich der Software eine neue Zertifizierung des Gesamtsystems. Dieses ist für eine praktische Umsetzung regelmäßig zu aufwändig und teuer.

Aus dem Dokument DE 4 332 143A ist eine Vorrichtung zum sicheren Darstellen von sicherheitskritische Daten einer Eisenbahnanlage bekannt, bei der die sicherheitskritischen Eingangsdaten über zwei unabhängigen redundanten Rechnerkanälen bearbeitet werden um redundanten Bilddaten zu erzeugen, die miteinander verglichen werden um eine Datenverfälschung zu erkennen, wobei zusätzlich eine Darstellungsverfälschung der anzuzeigenden Bilddaten durch ein fehlerhaftes Sichtgerät vermieden wird in dem das Sichtgerät regelmäßig eine Funktionsprüfung unterzogen wird, in dem es über den gesamten Bildschirm nacheinander mit allen darstellbaren Farben beaufschlagtwird, wobei eine optische Kontrolle durch einen Beobachter am Sichtgerät stattfindet.

Aus dem Dokument EP 0 856 792A ist eine Vorrichtung zum sicheren Darstellen von sicherheitskritischen Daten einer Eisenbahnanlage bekannt, bei der die sicherheitskritischen Eingangsdaten über zwei unabhängigen redundanten Rechnerkanälen bearbeitet werden um redundanten Bilddaten auf zwei separaten Bildschirme anzuzeigen, wobei Darstellungsfehler durch fehlerhafte Bildschirme durch einen direkten optischen Vergleich der beiden auf den beiden Bildschirmen dargestellten Bilder durch einen Beobachter erkannt werden.

Aus der WO 2007/104531 A1 ist eine medizinische Dosiervorrichtung bekannt, welche unter Verwendung von Prüfsummen bestimmt, ob eine angezeigte Dosis mit einer eingestellten Dosis übereinstimmt.

Der Erfindung liegt die Aufgabe zugrunde, ein verbessertes Verfahren zur Darstellung einer sicherheitsrelevanten Information auf einer Anzeigevorrichtung und eine Vorrichtung zur Durchführung des Verfahrens bereitzustellen, welche die eingangs genannten Nachteile zumindest teilweise vermeidet und insbesondere ein vereinfachtes Auswechseln oder Erneuern der Systemkomponenten ermöglicht.

Diese Aufgabe wird erfindungsgemäß in der einfachsten Ausführungsform gelöst durch Zuführung der Bilddatensequenz und der Eingangsgröße zu einer von der Rechnereinheit getrennten Prüfeinheit und Durchführen einer Sicherheitsprüfung in der Prüfeinheit. Diese erfolgt durch rechentechnisches Erstellen eines Prüfcodes für die Bilddatensequenz, Vergleichen des Prüfcodes mit mehreren - diskreten - in der Prüfeinheit vorhandenen Vergleichscodes, Zuordnen des so ermittelten Vergleichscodes zu einem korrespondierenden möglichen Wert der Eingangsgröße und dessen Vergleich mit dem Wert der Eingangsgröße.

Die Prüfeinheit bildet also entweder ein positives oder negatives Prüfergebnis zur Veranlassung einer sicherheitsgerichteten Reaktion. Die Prüfungseinheit enthält demnach mehrere abzählbare und eindeutige - diskrete - Vergleichscodes, z. B. in Form einer Tabelle, die für den jeweiligen Anwendungsfall repräsentativ sind und ordnet ferner jedem Vergleichscode den möglichen Werte der Eingangsgröße zu. Im Falle der Verwendung des Verfahrens zum Überprüfen eines Displays in einem Triebwagen, können die einzelnen Vergleichscodes z. B. unterschiedliche Geschwindigkeiten in Schritten von 1 km/h abbilden.

Nach der Berechnung des Prüfcodes wird bei der Sicherheitsprüfung eine Überprüfung in Form eines "Lookup" des Prüfcodes mit den vorliegenden Vergleichscodes durchgeführt. Wird dabei kein entsprechender Vergleichscode ermittelt, so kann bereits hier die sicherheitsgerichtete Reaktion veranlasst werden. Wird ein entsprechender Vergleichscode identifiziert, so wird von der Prüfeinheit der diesem Vergleichcode entsprechende mögliche Wert der Eingangsgröße zugeordnet, z. B. anhand obiger Tabelle. Der so ermittelte zulässige Wert der Eingangsgröße wird sodann mit der tatsächlichen Eingangsgröße verglichen. Ist das Ergebnis dieser Sicherheitsprüfung negativ, ggf. unter Berücksichtigung einer Toleranz, so kann die sicherheitsgerichtete Reaktion veranlasst werden.

Systembedingt weisen die Vergleichscodes eine für eine geforderte Fehlerunterdrückung ausreichende Hamming-Distanz zur Verwirklichung einer quantifizierbaren Unterscheidbarkeit der einzelnen Anzeigezustände sowie eine entsprechend quantifizierbare Unterscheidbarkeit von nicht bekannten Anzeigezuständen auf.

Als sicherheitsgerichtete Reaktion sind prinzipiell alle Verfahren geeignet, um einem Betrachter ein sicherheitskritischer Fehler eindeutig anzuzeigen. Mögliche anwendungsbezogene sicherheitsgerichtete Reaktionen können z. B. sein: das völlige oder teilweise Abschalten der Anzeigevorrichtung, das Bewirken einer Datenstreuung, einer Maskierung oder Verfremdung, das Abschalten der Rechnereinheit und Überführen in einen gesicherten Zustand oder die Meldung des sicherheitskritischen Fehlers an eine übergeordnete Einheit.

Die Prüfeinheit realisiert demnach eine von der Rechnereinheit völlig unabhängige Überprüfung der Rechnereinheit mit besonders einfachen Mitteln und beruht auf der überraschenden Erkenntnis, dass bereits durch die Sicherheitsprüfung in der Prüfeinheit alle sicherheitsrelevanten Systemfehler offenbart werden. Das Verfahren und die Vorrichtung zu dessen Durchführung sind somitvöllig unabhängig von den Systembestandteilen, z. B. dem Prozessor, der Grafikkarte und Ähnlichem, also der aktuellen Rechnertechnik, insbesondere auch dem Betriebssystem. Durch das Einführen der Sicherheitsprüfung aller oder eines Teils der zur Darstellung bestimmten Daten durch die Prüfeinheitmuss im Gegensatz zum Stand der Technik auch nicht mehr beim Auswechseln von Bestandteilen der Rechnereinheit und bei jeder Softwareaktualisierung ein Sicherheitsnachweis entsprechend der geforderten Sicherheitsanforderungsstufe erbracht werden. Das erfindungsgemäße Verfahren ermöglicht es mithin, immer die neueste Technik innerhalb der Recheneinheit einzusetzen, ohne dass der bestehende Sicherheitsnachweis gefährdet wird. Abstrahiert verwirklicht die Erfindung somit besonders einfache Prüfung der der Bilddatensequenzen gegenüber dem anzuzeigenden Wert der Eingangsgröße.

Für den Fachmann versteht sich, dass die Eingangsgrößen ohne den Schutzbereich der Erfindung zu verlassen sowohl ein analoges als auch als digitales Signal sein können, und über alle bekannten Schnittstellen zwischen der Rechnereinheit, der Anzeigevorrichtung und der Prüfeinheit übertragen werden können. Die Vergleichscodes können schaltungstechnisch oder z. B. über Schieberegister, aber auch programmtechnisch realisiert sein.

Vorzugsweise wird die sicherheitsgerichtete Reaktion durch die Prüfeinheit selbst bewirkt, z. B. durch Unterbrechen der Stromzufuhr für die Anzeigevorrichtung. Es liegt jedoch auch im Rahmen der Erfindung, dass die Prüfeinheit in Abhängigkeit des Prüfergebnisses nur ein Steuersignal zur Veranlassung der sicherheitsgerichteten Reaktion an eine andere Systemkomponente oder ein übergeordnetes System sendet, z. B. an eine von der Prüfeinheit verschiedene Rechnereinheit.

Für den Fachmann ist verständlich, wie die den Vergleichscodes entsprechenden Abbildungen am besten im Vorfeld generiert und erstellt werden. Grundsätzlich kann es sich dabei nicht nur um Symboldarstellungen mit verschiedenen Zuständen (z. B. AN/AUS) handeln, sondern auch um Abbildungen von Einzelschritten für quantifizierte Analog-Abbildungen, die entsprechende quasi - analoge Darstellungen abbilden, wie z. B. Zeigerinstrumente oder Pendelanzeiger. Beispielsweise kann ein elektrischer Spannungswert von 0 Volt bis 100 Volt als Eingangsgröße in Schritten von 1 Volt zugeführt oder auf solche reduziert werden und diese über ein durch Software auf der Anzeigevorrichtung dargestelltes Rundinstrument durch 100 Anzeigezustände in Einzelbildern realisiert werden; dabei zeigt jedes Einzelbild die jeweils korrekte Zeigerstellung an.

Zur Verwirklichung einer bewegten Darstellung wird die Sicherheitsprüfung vorzugsweise als zyklische Prüfung mit einer Häufigkeit bis zur Rate der Bildwiederholungsrate der Anzeigevorrichtung und/oder der Änderungsrate der Eingangsgröße durchgeführt.

Bei einer besonders bevorzugten Ausführungsform reicht es für die Sicherheitsprüfung zur eindeutigen Identifikation eines Anzeigezustands aus, die Überprüfung auf einen relevanten Teilbereich oder einen Abschnitt des Anzeigebildes zu reduzieren, welche für einen Betrachter ausreichend sind, den korrekten Anzeigewert zu charakterisieren. Dieses können z. B. die den Zeigerstumpf eines Rundinstruments umfassenden Zeilen und Spalten einer Darstellung sein. Sofern der nicht überwachte Bereich außerhalb des relevanten Teilbereichs und der überwachte Bereich innerhalb des relevanten Teilsbereichs den gleichen Anzeigwert für einen Betrachtervisualisieren, istdie Prüfeinheitim Stande den möglichen Fehler zu identifizieren. Sind demgegenüber der visualisierte Anzeigewert im nicht überwachten Bereich außerhalb des relevanten Teilbereichs und der Anzeigewertinnerhalb des überwachten Teilsbereichs nicht identisch, so ist diese Diskrepanz für einen Betrachter als Fehlerzustand erkennbar.

Oben genannte Voraussetzungen sind in der beschriebenen Form praktisch für alle quantitativen Eingangsgrößen erfüllt. Aber auch Textinformationen, die in einem bestimmten Bereich auf dem Display dargestellt werden, können mit dem Verfahren überprüft werden (gegebenenfalls istjeder Buchstabe oder ein bestimmtes Wort ein solcher Anzeigezustand).

Die Prüfeinheit ist erfindungsgemäß als getrennter Automat , d.h. nicht als Bestandteil der Rechnereinheit selbst ausgebildet. Besonders Vorteilhaft ist die softwaremäßige Realisierung. Dieses bietet den Vorteil einer noch weiter reichenden Plattform- und Softwareunabhängigkeit der Rechnereinheit.

Zur Verwirklichung einer sequenziellen Fehlertoleranz kann bei einer Weiterentwicklung die sicherheitsgerichtete Reaktion erst nach einer vordefinierten Anzahl von negativen Prüfergebnissen veranlasst werden. Dabei kann auch vorgesehen sein, dass ein für eine Abschaltung der Anzeigvorrichtung erforderlicher Schwellwert schneller erreicht wird, weil z. B. die negativen Prüfergebnisse mit einem größten Faktor in die Berechnung eingehen, als das Herabzählen negativer Prüfergebnisse durch positive Prüfergebnisse.

Eine Möglichkeit zur Verbesserung der horizontalen Fehlertoleranz besteht darin, eine Sicherheitsprüfung auch dann als positives Prüfergebnis zu werten, wenn der Wert der Eingangsgröße mehreren der bei der Sicherheitsprüfung ermittelten möglichen erlaubten Vergleichswerte der Eingangsgröße entsprechen darf. Dieses erlaubt z. B. in der Prüfeinheit abgelegte "benachbarte" oder in einem vordefinierten Umfeld angrenzende Vergleichscodes als positives Prüfergebnis zu werten, wenn z. B. das beobachtete Fahrzeug beschleunigt. Die für den jeweiligen Anwendungsfall relevanten Zeit- und/ oder Werttoleranzen können also bei der Erstellung der Vergleichscodes und der Sicherheitsprüfung so einfach berücksichtigt werden.

Mit dem erfindungsgemäßen Verfahren und der Vorrichtung zu dessen Durchführung können naturgemäß auch sequenziell und/oder parallel mehrere Eingangsgrößen der Rechnereinheit verarbeitet und in der Prüfeinheit nach Bildung von verschiedenen Prüfcodes mit verschiedenen Gruppen von Vergleichscodes verglichen werden. Prinzipiell liegt es auch im Rahmen der Erfindung, mehrere getrennte Prüfeinheiten für getrennte Anzeigevorrichtungen bzw. für verschiedene Eingangsgrößen vorzusehen.

Wie eingangs erwähnt, können beliebige Schnittstellen und somit alle gängigen Mittel zur Bilddaten-Übertragung zwischen den zur Durchführung des Verfahrens eingesetzten Systemkomponenten eingesetzt werden, so z. B. ein LVDS oder ein vergleichbar standardisiertes digitales Datensignal zur Übertragung zwischen der Recheneinheit und der Anzeigevorrichtung.

Die im Rahmen der Sicherheitsprüfung eingesetzten Kodierverfahren zur Erzeugung des Prüfcodes fester Länge können z. B. ein CRC16, CRC32 oder ein ähnliches bekanntes Kodierverfahren sein.

Für eine schnellere Bearbeitung kann die Sicherheitsprüfung für unterschiedliche Teile der Bilddatensequenzen parallel und unabhängig voneinander in der Prüfeinheit durchgeführt werden. Beispielsweise können sequenzielle Bilddaten getrennt nach den einzelnen Farben betrachtet werden.

In der bevorzugten Ausführungsform ist die Prüfeinheit als field programmable gate array (FPGA) ausgebildet. Bekanntlich ist dieser ein programmierbarer integrierter Schaltkreis der Digitaltechnik und damit eine bedarfsgerecht programmierbare logische Schaltung. Die Realisierung kann aber z.B. auch als DSP-Kontroller erfolgen oder mittels vollständiger oder teilweiser Hardwareumsetzung.

Ferner betrifft die Erfindung eine Sicherheitseinheit zur Darstellung einer sicherheitsrelevanten Information, insbesondere zur Durchführung des Verfahrens nach einem der vorhergehenden Verfahrensansprüche, mit einer mit mindestens einer Eingangsgröße gespeisten Rechnereinheit zur Umsetzung dieser Eingangsgröße in eine Bilddatensequenz und einer mit der Rechnereinheit verbundenen Anzeigevorrichtung zur Darstellung der Bilddatensequenz. Unter zugrunde legen der eingangs dargelegten Nachteile am Stand der Technik und der sich daraus ergebenden Aufgabe, wird diese Aufgabe durch eine von der Rechnereinheit getrennte Prüfeinheit mit einem Prüfcodegenerator, mehreren anwendungsspezifischen Vergleichscodes, einer Vergleichseinheit und mit einem Eingang und einem Speicher für die Eingangsgröße gelöst. Hierbei wird der Prüfcodegenerator für mindestens einen Teil der Bilddatensequenz einen Prüfcode berechnen, diesen so errechneten Prüfcode mit den vorhandenen Vergleichscodes vergleicht und die Prüfeinheit ordnet bei positiver Übereinstimmung diesem so ermittelten Vergleichscode einen entsprechenden Wert der Eingangsgröße als Vergleichswert zu und vergleicht dann diesen Vergleichswert mit der Eingangsgröße in der Vergleichseinheit, um bei einer negativen Sicherheitsprüfung eine sicherheitsgerichtete Reaktion zu veranlassen.

Weitere Einzelheiten, Vorteile und Merkmale der Erfindung lassen sich dem nachfolgenden Teil der Beschreibung entnehmen, in der bevorzugte Ausführungsbeispiele des erfindungsgemäßen Verfahrens und Vorrichtungen zu dessen Umsetzung anhand von 2 Zeichnungen näher erläutert sind. Es zeigen:
- Fig. 1: ein schematische Darstellung einer ersten Ausfüh- rungsform eines erfindungsgemäßen Displays für ei- nen Triebwagen; und
- Fig.2: ein schematische Darstellung einer zweiten Ausfüh- rungsform eines erfindungsgemäßen Displays,

Gleiche und entsprechende Bauteile sind mit denselben Bezugszeichen versehen.

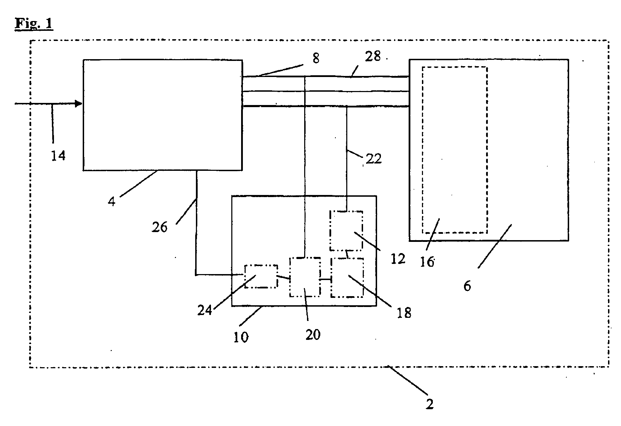

Fig. 1 zeigt den prinzipiellen Aufbau einer Sicherheitseinheit 2 zur Durchführung des erfindungsgemäßen Verfahrens im Triebwagen eines Zuges.

Demnach besteht die in ihrer Gesamtheit mit 2 bezeichnete Sicherheitseinheit aus einer die Rechnereinheit bildenden PC 4 und einer aus einem TFT-Display 6 bestehenden Anzeigevorrichtung, die über ein LVDS 8 verbunden sind, das mehrere Leitungen umfasst, von denen aber nur 3 schematisch dargestellt sind. Ferner umfasst die Sicherheitseinheit 2 eine als FPGA 10 ausgebildete Prüfeinheit.

In dem dargestellten Beispiel ist mit dem Bezugszeichen 14 eine dem PC 4 zugeführter Geschwindigkeitswert (Vᵢₛₜ) als Eingangsgröße gekennzeichnet. Dieser Wert wird innerhalb des PCs 4 durchgeschliffen und über eine Eingangleitung 26 an den FPGA 10 übermittelt. Alternativ kann der Wert der Eingangsgröße 14 auch direkt dem FPGA 10 zugeführt werden.

Durch den PC 4 werden sicherheitsrelevante Informationen auf einem abgegrenzten Teilbereich 16 des TFT-Displays 6 dargestellt. Die sicherheitsrelevante Information erscheint vorliegend als "vorgerenderte" und damit fest vordefinierte Bitmap auf dem TFT-Display 6.

Das über den LVDS 8 eingespeiste hochfrequente Eingangssignal desTFT-Displays 6 wird von dem FPGA 10 über die Rückleseleitung 20 aus- oder zurückgelesen. Der FPGA erstellt für das Areal 16 bei der Sicherheitsprüfung eine CRC-Prüfsumme in einem Prüfcodegenerator 12. Dabei ist jeder durch den PC 4 erzeugten Bitmap in einer Tabelle 18 des FPGA 10 eine vorberechnete CRC-Prüfsumme als Vergleichscode eindeutig zugeordnet und jedem dieser Vergleichscodes ein möglicher Wert der Eingangsgröße 14 vorgesehen.

Der FPGA 10 vergleicht zunächst den durch den Prüfcodegenerator 12 errechneten Prüfcode mit den in der Tabelle 18 vorhandenen Vergleichscodes. Bei Übereinstimmung des Prüfcodes mit einem Vergleichscode wird sodann der aus der Tabelle 18 ermittelte mögliche Wert der Eingangsgröße in einer Vergleichseinheit 20 mit der in einem Speicher 24 abgelegten Wert der Eingangsgröße verglichen. Werden dabei unzulässige Abweichungen ermittelt, so erfolgt eine sicherheitsgerichtete Ausfallreaktion durch Unterbrechung der Netzspannungsleitung 28 des TFT-Displays 6.

Entscheidend für die sicherheitsrelevante Auswertung der Geschwindigkeitsanzeige ist die zeitgerechte Anzeige des entsprechenden Geschwindigkeitswertes innerhalb zulässiger - Zeit- und Wert-Toleranzen.

Die von dem FTGP 10 bewirkte Abschaltfunktion arbeitet in der vorliegenden Ausführungsform nach dem "Ruhestromprinzip" (äquivalent zu sicherheitsrelevanten Relais-Schaltungen), so dass zum Aufrechterhalten des regulären Betriebszustandes durch die Prüfeinheit eine Aktiv-Ausgabe erforderlich ist, und bei Ausfall der Prüfeinheit / Abschaltfunktion ("Passivierung") eine sicherheitsgerichtete Ausfallreaktion erfolgt.

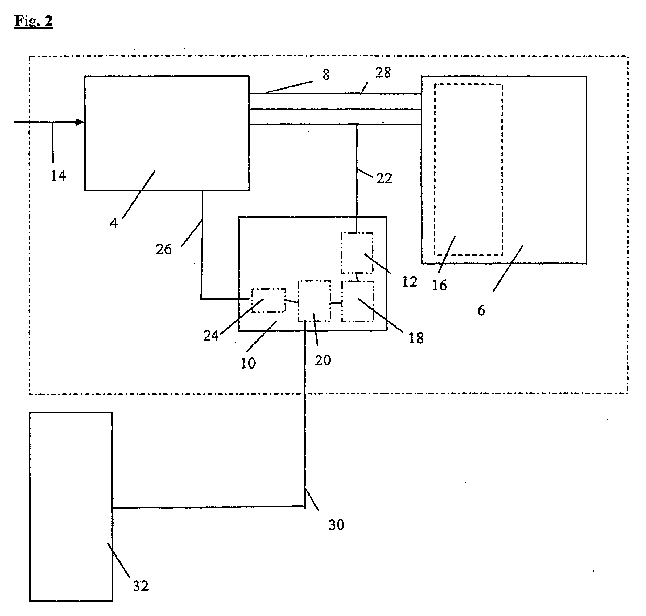

Bei der in Fig. 2 dargestellten alternativen Ausführungsform eines erfindungsgemäßen Displays wird das negative Prüfergebnis der Sicherheitsprüfung des FPGA 10 über eine Rückmeldungsleitung 30 an einen übergeordneten Rechner 32 übermittelt, der dann die sicherheitsgerichtete Reaktion bewirkt, z. B. das Abbremsen desTriebwagens. Diese Übertragung kann alternativ auch per Funk erfolgen, was natürlich für alle Signale gilt.

### Bezugszeichenliste

- 2: Sicherheitseinheit
- 4: PC
- 6: TFT-Display
- 8: LVDS
- 10: FPGA
- 12: Prüfcodegenerator
- 14: Geschwindigkeitswert
- 16: Areal
- 18: Tabelle
- 20: Vergleichseinheit
- 22: Rückleseleitung
- 24: Speicher
- 26: Eingangsleitung
- 28: Netzspannungsleitung
- 30: Leitung
- 32: übergeordneten Rechner
- 42: Vergleichseinheit

## Patentansprüche

1. Verfahren zur sicheren Darstellung einer sicherheitsrelevanten Information, umfassend: Eingeben mindestens einer Eingangsgröße in eine Rechnereinheit, rechentechnisches Verarbeiten der Eingangsgröße in der Rechnereinheit zu einer die Eingangsgröße abbildenden Bilddatensequenz, Weiterleiten der Bilddatensequenz an eine Anzeigevorrichtung und Darstellen der Bilddatensequenz auf der Anzeigevorrichtung, **GEKENNZEICHNET DURCH** Zuführung der Bilddatensequenz und der Eingangsgröße zu einer von der Rechnereinheit getrennten Prüfeinheit und Durchführen einer Sicherheitsprüfung in der Prüfeinheit durch rechentechnisches Erstellen eines Prüfcodes für die Bilddatensequenz, Vergleichen des Prüfcodes mit mehreren in der Prüfeinheit vorhandenen Vergleichscodes, Zuordnen des so ermittelten Vergleichscodes zu einem korrespondierenden möglichen Wert der Eingangsgröße und dessen Vergleich mit dem Wert der Eingangsgröße zur Bildung entweder eines positiven oder negativen Prüfergebnisses in der Prüfeinheit zur Veranlassung einer sicherheitsgerichteten Reaktion.

2. Verfahren nach Anspruch 1, **DADURCH GEKENNZEICHNET, dass** bei negativem Prüfergebnis die sicherheitsgerichtete Reaktion in der Prüfeinheit veranlasst wird.

3. Verfahren nach Anspruch 1, **DADURCH GEKENNZEICHNET, dass** bei negativem Prüfergebnis die sicherheitsgerichtete Reaktion in einer von der Prüfeinheit verschiedenen Rechnereinheit veranlasst wird.

4. Verfahren nach einem der Ansprüche 1 bis 3, **DADURCH GEKENNZEICHNET, dass** die sicherheitsgerichtete Reaktion eine Abschaltung der Anzeigevorrichtung umfasst.

5. Verfahren nach Anspruch 2 bis 4, **DADURCH GEKENNZEICHNET, dass** die sicherheitsgerichtete Reaktion erst nach einer vordefinierbaren Anzahl von negativen Prüfergebnissen erfolgt.

6. Verfahren nach einem der vorhergehenden Ansprüche, **DADURCH GEKENNZEICHNET, dass** eine Sicherheitsprüfung auch dann als positives Prüfergebnis gewertet wird, wenn der Wert der Eingangsgröße mehreren der möglichen erlaubten Vergleichswerte der Eingangsgröße entsprechen darf.

7. Verfahren nach einem der vorhergehenden Ansprüche, **DADURCH GEKENNZEICHNET, dass** mehrere Eingangsgrößen in der Rechnereinheit verarbeitet, dieserzugehörige Bilddatensequenzen an eine Anzeigvorrichtung oder mehrere Anzeigevorrichtungen weitergeleitet und auf dieser dargestellt werden, und für die Bilddatensequenzen jeweils ein zugehöriger Prüfcode in einer Prüfeinheit gebildet und geprüft werden.

8. Verfahren nach Anspruch 7, **DADURCH GEKENNZEICHNET, dass** die unterschiedlichen Eingangs-größen der verschiedenen Bilddatensequenzen auf abgegrenzten Teilbereichen auf der Anzeigevorrichtung dargestellt werden.

9. Verfahren nach einem der vorhergehenden Ansprüche, **DADURCH GEKENNZEICHNET, dass** das Erstellen des Prüfcodes bei der Sicherheitsprüfung ein CRC16, CRC32 oder ähnliches Codierverfahren umfasst.

10. Verfahren nach einem der Ansprüche 6 bis 9, **DADURCH GEKENNZEICHNET, dass** die unterschiedlichen Bilddatensequenzen parallel und unabhängig in der Prüfeinheit geprüft werden.

11. Verfahren nach einem der vorhergehenden Verfahrensansprüche, **DADURCH GEKENNZEICHNET, dass** das zu überwachende Areal auf einen die anzuzeigende Eingangsgrößevollständigfüreinen Betrachter charakterisierenden Abschnitt reduziert wird.

12. Sicherheitseinheit, insbesondere zur Durchführung des Verfahrens nach einem der vorhergehenden Verfahrensansprüche, mit einer mit mindestens einer Eingangsgröße gespeisten Rechnereinheit zur Umsetzung dieser Eingangsgröße in eine Bilddatensequenz und einer mit der Rechnereinheit verbundenen Anzeigevorrichtung zur Darstellung der Bilddatensequenz, **gekennzeichnet durch** eine von der Rechnereinheit getrennte Prüfeinheit (10) mit einem Prüfcodegenerator (12), mehreren anwendungsspezifischen Vergleichscodes, einer Vergleichseinheit (20) und mit einem Eingang und einem Speicher (24) für die Eingangsgröße, wobei der Prüfcodegenerator (12) für mindestens einen ausgelesenen Teil der Bilddatensequenz einen Prüfcode berechnet, diesen so errechneten Prüfcode mit den vorhandenen Vergleichscodes vergleicht und bei positiver Übereinstimmung diesem so ermittelten Vergleichscode einen entsprechenden Wert der Eingangsgröße als Vergleichswert zuordnet und die Prüfeinheit (10) dann in der Vergleichseinheit (20) diesen Vergleichswert mit der Eingangsgröße vergleicht, um bei einer Nichtüberseinstimmung, d.h. bei einem negativen Prüfergebnis eine sicherheitsgerichtete Reaktion zu veranlassen.

13. Vorrichtung nach Anspruch 12, **DADURCH GEKENNZEICHNET, dass** die Anzeigevorrichtung als TFT-Dislay (6) ausgebildet ist.

14. Vorrichtung nach Anspruch 12 oder 13, **DADURCH GEKENNZEICHNET, dass** die Prüfeinheit als FP-GA (10) ausgebildet ist.

## Claims

1. Method for the safe representation of a safety-relevant information including: entry of at least one input parameter into a processor, computerized processing of the input parameter transforming it into a sequence of image data that represent the input parameter, transmitting the sequence of image data to a display and representing the sequence of image data on the display, **CHARACTERIZED IN THAT** the sequence of image data and the input parameter are transmitted to a test unit, which is separate from the processor, a safety test is carried out in the test unit by computerized generation of a test code for the sequence of image data, the test code is checked against several reference codes in the test unit, the then identified reference code is assigned to a corresponding possible value of the input parameter and checked against the value of the input parameter with the test unit generating either a positive or a negative test result to provoke a safetyfocused reaction.

2. Method according to claim 1, **characterized in that** the safety-focused reaction is initiated in the test unit in case the safety test leads to a negative result.

3. Method according to claim 1 , **characterized in that** the safety-focused reaction is initiated in a processor different from the test unit if the safety test leads to a negative result.

4. Method according to one of the claims 1 to 3, **characterized in that** the safety-focused reaction includes the display to be switched off.

5. Method according to claims 2 to 4, **characterized in that** the safety-focused reaction is initiated only after a predefined number of negative test results.

6. Method according to one of the preceding claims, **characterized in that** a safety test is considered as a positive test result even if the value of the input parameter corresponds to several of the possible admissible reference values of the input parameter.

7. Method according to one of the above mentioned claims, **characterized in that** several input parameters are processed in the processor, the corresponding sequences of image data are transmitted to one or several displays and made visible on it/them, and a corresponding test code is generated and tested for the sequences of image data.

8. Method according to claim 7, **characterized in that** the different input parameters of the several sequences of image data are represented on confined areas on the display.

9. Method according to one of the preceding claims, **characterized in that** generating the test code during the safety test involves a CRC16, CRC32 or an equivalent coding method.

10. Method according to one of claims 6 to 9, **characterized in that** different sequences of image data are tested in the test unit in a parallel and independent manner.

11. Method according to one of the preceding method claims, **characterized in that** the section to be supervised is limited to a segment that completely characterizes the input parameter to be displayed to the observer.

12. Safety unit, especially for the application of the method according to one of the above mentioned method claims, equipped with a processor fed with at least one input parameter to transform the latter into a sequence of image data and a display connected to the processor to represent the image data, **characterized by** a test unit (10), which is separate from the processor, including a test code generator (12), several application-specific reference codes, a reference unit (20) and an input as well as a memory (24) for the input parameter, with the test code generator (12) generating a test code for at least one readout part of the sequence of image data, comparing the thus generated test code with the existing reference codes and, in case they are in accordance with each other, assigning the thus identified reference code a corresponding value of the input parameter as a reference value and the test unit (10) then comparing this reference value with the input parameter in the reference unit (20) in order to initiate a safety-focused reaction in case of non-conformance, i.e. in case of a negative test result.

13. Apparatus according to claim 12, **characterized in that** the display is designed as a TFT-Display..

14. Apparatus according to claim 12 or 13, **characterized in that** the test unit (10) is designed as an FPGA (10).

## Revendications

1. Procédé pour la visualisation sécurisée d'une information relative à la sécurité, comprenant : saisie d'une donnée d'entrée dans une unité d'ordinateur, traitement informatique de la donnée d'entrée dans l'unité d'ordinateur pour obtenir une séquence de données d'image représentant la donnée d'entrée, transmission de la séquence de données d'image à un dispositif d'affichage et visualisation de la séquence de données d'image sur le dispositif d'affichage, **CARACTERISE PAR** le fait d'amener la séquence de données d'image et la donnée d'entrée à une unité de vérification, qui est séparée de l'unité d'ordinateur, et d'effectuer une vérification de sécurité au sein de l'unité de vérification par le biais d'une génération informatique d'un code de vérification pour la séquence de données d'image, d'une comparaison du code de vérification avec plusieurs codes de comparaison existant dans l'unité de vérification, d'une association du code de comparaison ainsi déterminé à une valeur correspondante possible de la donnée d'entrée et d'une comparaison de cette dernière avec une valeur de la donnée d'entrée pour la génération d'un résultat de vérification, soit positif ou négatif, dans l'unité de vérification pour produire une réaction destinée à la sécurité.

2. Procédé selon la revendication 1, **CARACTERISE EN CE QUE**, dans le cas d'un résultat de vérification négatif, la réaction destinée à la sécurité est produite dans l'unité de vérification.

3. Procédé selon la revendication 1, **CARACTERISE EN CE QUE**, dans le cas d'un résultat de vérification négatif, la réaction destinée à la sécurité est produite dans une unité d'ordinateur différente de l'unité de vérification.

4. Procédé selon l'une des revendications 1 à 3, **CARACTERISE EN CE QUE** la réaction destinée à la sécurité comprend l'arrêt du dispositif d'affichage.

5. Procédé selon l'une des revendications 2 à 4, **CARACTERISE EN CE QUE** la réaction destinée à la sécurité n'a lieu qu'après un nombre pré-déterminable de résultats de vérification négatifs.

6. Procédé selon l'une des revendications précédentes, **CARACTERISE EN CE QU'**une vérification de sécurité est également considéré comme résultat de vérification positif, si la valeur de la donnée d'entrée peut correspondre à plusieurs des valeurs possibles permises de la donnée d'entrée.

7. Procédé selon l'une des revendications précédentes, **CARACTERISE EN CE QUE** plusieurs données d'entrée sont traitées dans l'unité d'ordinateur, des séquences de données d'image y appartenant sont transmises à un dispositif d'affichage ou à plusieurs dispositifs d'affichage et y sont visualisées, et pour les séquences de données d'image un code de vérification appartenant est respectivement généré et vérifié dans l'unité de vérification.

8. Procédé selon la revendication 7, **CARACTERISE EN CE QUE**, les différentes données d'entrée des diverses séquences de données d'image sont visualisées dans des zones partielles délimitées sur le dispositif d'affichage.

9. Procédé selon l'une des revendications précédentes, **CARACTERISE EN CE QUE** la génération du code de vérification lors de la vérification de sécurité comprend un procédé de codage CRC16, CRC32 ou similaire.

10. Procédé selon l'une des revendications 6 à 9, **CARACTERISE EN CE QUE** les diverses séquences de données d'image sont vérifiés en parallèle et de manière indépendante dans l'unité de vérification.

11. Procédé selon l'une des revendications précédentes, **CARACTERISE EN CE QUE** la surface à surveiller est réduite à une partie caractérisant complètement la donnée d'entrée à afficher pour un observateur.

12. Unité de sécurité, en particulier pour effectuer le procédé selon l'une des revendications de procédé précédentes, avec une unité d'ordinateur alimentée en au moins une donnée d'entrée pour transformer cette donnée d'entrée en une séquence de données d'image et avec un dispositif d'affichage relié à l'unité d'ordinateur pour visualiser la séquence de données d'image, **charact érisé par** une unité de vérification (10), qui est séparée de l'unité d'ordinateur, avec un générateur (12) de code de vérification, plusieurs codes de comparaison spécifiques à l'application, avec une unité de comparaison (20) et avec une entrée et une mémoire (24) pour la donnée d'entrée, dans laquelle le générateur (12) de code de vérification calcule, pour au moins une partie lue de la séquence de données d'image, un code de vérification, compare le code de vérification ainsi calculé avec les plusieurs codes de comparaison existants et, lors d'une concordance positive, associe à ce code de comparaison ainsi déterminé une valeur correspondante de la donnée d'entrée en tant que valeur de comparaison et l'unité de vérification (10) compare ensuite dans l'unité de comparaison (20) cette valeur de comparaison avec la donnée d'entrée, afin de produire en cas de non-concordance, c.-à-d. dans le cas d'un résultat de vérification négatif, une réaction destinée à la sécurité.

13. Dispositif selon la revendication 12, **CARACTERISE EN CE QUE** le dispositif d'affichage est réalisé sous forme d'écran TFT (6).

14. Dispositif selon la revendication 12 ou 13, **CARACTERISE EN CE QUE** l'unité de vérification est réalisée sous forme de circuit logique programmable FPGA (10).
